# EUROPEAN PATENT APPLICATION

(11) **EP 1 229 706 A2**
(43) Date of publication of application: **07.08.2002**
(21) Application number: 01850146.0
(22) Date of filing: 23.08.2001
(51) Int. Cl.: H04M 3/00, H04Q 1/14, H04M 11/06

(54) **System and method for switching digital subscriber line service**

(30) Priority: 31.01.2001 US 772959
(71) Applicant: NHC Communications, Inc., Mount Royal, Quebec H4P 1A5 (CA)
(72) Inventor: Teixeira, Joe, Mount Royal, Quebec H4P 1A5 (CA)
(74) Representative: Wihlsson, Joakim Per Magnus

(57) **Abstract**

A system and method for providing digital subscriber line service that uses a cross-connect switch to switch in new connections and switch out obsolete connections.

The method comprises the steps of: providing digital subscriber line service for a first subscriber via a cross-connect switch connected to a digital subscriber line access multiplexer connected to a digital telecommunications network, the cross connect switch supplying a connection between data processing equipment of the first subscriber and the digital subscriber line access multiplexer; receiving, at a network management system connected to the cross connect switch, an indication that the first subscriber has terminated service; in response to receiving the message at the network management system, transmitting a command to the cross connect switch to switch out the connection of the data processing equipment of first subscriber to the digital access multiplexer; and in response to receiving the command at the cross-connect switch, switching out the connection of the data processing equipment of first subscriber to the digital access multiplexer.

## Description

### FIELD OF THE INVENTION

The present invention relates to a system and method for switching digital subscriber line service in which new connections are switched in and obsolete connections are switched out.

### BACKGROUND OF THE INVENTION

With the mass deployment of digital subscriber line (DSL) services of all technologies (xDSL), competitive local exchange carriers (CLECs) are deploying leading edge technology to help shorten the deployment time and reduce costs. One of these products is the metallic test access cross-connect (MTAC). The MTAC, also known as an *exception switch,* is used to allow test equipment to access the copper pairs coming in from the local loop, which connect customer equipment with the central office. The MTAC sits between the CLEC's DSL access multiplexer (DSLAM) and the local loop. In addition to test-access capability, some MTACs support limited fallback switching, allowing a subscriber to be switched over from a faulty DSL port to an operating one. The number of ports that support this feature are usually limited to a small percent of the total number of lines supported by the switch, and because of this, this switch requires regular cabling update visits.

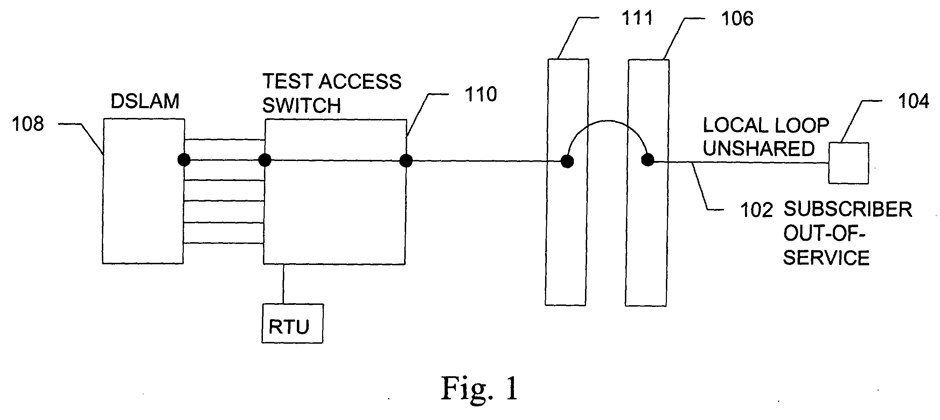

However, a problem arises with this prior art arrangement, as shown in Fig. 1. In an unshared line environment, the ILEC provides a dedicated copper pair 102 from the subscriber's premises 104 to the CLEC's demarcation point 106 in the co-location arrangement (COLLO) at the CLEC's central office. The line is terminated first at the MDF 106 in the central office and then patched to a termination block 111 in the collocation (COLLO), through the test access unit 110, connecting the subscriber to the DSLAM 108 and enabling the CLEC to provide DSL service to the subscriber.

Once the requisite procedures have been completed and the line is operative, if the subscriber decides to terminate the DSL service or to patronize a different Internet service provider (ISP), a problem arises. Up until now, the CLEC was happy to have this line terminated in its COLLO. Now, the CLEC may want it disconnected, so that the DSL port can be connected to a new subscriber. As long as the subscriber line remains terminated on the CLEC's termination block, the DSLAM port remains idle and not producing revenue. Notwithstanding the service charge from the ILEC for disconnecting the line, the ILEC can take up to 45-90 days to disconnect the line from the moment the CLEC makes the request. In the meantime, the CLEC is stuck with an idle DSLAM port. In order to free up the port, the CLEC would have to send a technician to the collocation (COLLO) to make the re-connection manually.

Furthermore, the test-access switches, such as test-access switch 110, which are being deployed between the DSLAM and the MDF have limited cross-connect capability and will not allow the obsolete subscriber line to be disconnected remotely. In order to circumvent the problem, CLECs have resorted to Band-Aid solutions, such as investing in excess DSLAM capacity to offset the lost ports until the line is disconnected by the ILEC. The source of the problem however remains unsolved.

In most cases the CLEC is using a test-access switch with limited cross-connect capability. The limited cross-connect capability allows only a small portion of the DSLAM access ports to be switched to another line. This only partially addresses the problem because statistically speaking the idle DSLAM port is likely to be connected to a line that cannot be switched remotely.

### SUMMARY OF THE INVENTION

The present invention is a system and method for providing digital subscriber line service that overcomes the problem of the prior art by using a true remote "any-to-any" cross-connect matrix switch to switch in new connections and switch out obsolete connections. The present invention alleviates the problem while preserving the essential test-access capability for local loop qualification and troubleshooting.

The method of the present invention comprises the steps of: providing digital subscriber line service for a first subscriber via a cross-connect switch connected to a digital subscriber line access multiplexer connected to a digital telecommunications network, the cross connect switch supplying a connection between data processing equipment of the first subscriber and the digital subscriber line access multiplexer; receiving, at a network management system connected to the cross connect switch, an indication that the first subscriber has terminated service; in response to receiving the message at the network management system, transmitting a command to the cross connect switch to switch out the connection of the data processing equipment of first subscriber to the digital access multiplexer; and in response to receiving the command at the cross-connect switch, switching out the connection of the data processing equipment of first subscriber to the digital access multiplexer.

The connection between data processing equipment of the first subscriber and the digital subscriber line access multiplexer may comprise a central office MDF connected to the data processing equipment of the first subscriber, a collocation arrangement demarcation connected to the cross-connect switch and a patch line connecting the central office MDF to the collocation arrangement demarcation. The connection between the data processing equipment of the first subscriber and the central office MDF may be unshared. The cross-connect switch may be connected to a port of the digital subscriber line access multiplexer. The step of switching out the connection of the data processing equipment of the first subscriber to the digital access multiplexer may free up the port of the digital subscriber line access multiplexer.

The method may further comprise the steps of: receiving, at a network management system connected to the cross connect switch, an indication that a second subscriber has initiated service; in response to receiving the message at the network management system, transmitting a command to the cross connect switch to connect data processing equipment of second subscriber to the digital access multiplexer; and in response to receiving the command at the cross-connect switch, connecting the data processing equipment of the second subscriber to the digital access multiplexer.

The cross-connect switch may be connected to a port of the digital subscriber line access multiplexer and the step of switching out the connection of the data processing equipment of first subscriber to the digital access multiplexer frees up the port of the digital subscriber line access multiplexer.

The step of connecting the data processing equipment of the second subscriber to the digital access multiplexer may comprise the step of: connecting the data processing equipment of the second subscriber to the port of the digital subscriber line access multiplexer that was freed up by the step of switching out the connection of the data processing equipment of the first subscriber to the digital access multiplexer.

The connection between data processing equipment of the first subscriber and the digital subscriber line access multiplexer may comprise a central office MDF connected to the data processing equipment of the first subscriber, a collocation arrangement demarcation connected to the cross-connect switch and a patch line connecting the central office MDF to the collocation arrangement demarcation. The connection between the data processing equipment of the first subscriber and the central office MDF may be unshared. The connection between data processing equipment of the second subscriber and the digital subscriber line access multiplexer may comprise a central office MDF connected to the data processing equipment of the second subscriber, a collocation arrangement demarcation connected to the cross-connect switch and a patch line connecting the central office MDF to the collocation arrangement demarcation. The connection between the data processing equipment of the second subscriber and the central office MDF may be unshared.

### BRIEF DESCRIPTION OF THE DRAWINGS

The details of the present invention, both as to its structure and operation, can best be understood by referring to the accompanying drawings, in which like reference numbers and designations refer to like elements.
- Fig. 1: is a block diagram of a prior art telecommunications system implementing xDSL service.
- Fig. 2: is an exemplary block diagram of telecommunications system, according to the present invention, implementing xDSL service.
- Fig. 3: is an exemplary flow diagram of a process of operation of the present invention, implemented in the system shown in Fig. 2.
- Fig. 4: is an exemplary block diagram of a network management system shown in Fig. 2.
- Fig. 5: is an exemplary block diagram of a cross-connect switch shown in Fig. 2.
- Fig. 6: shows an exemplary matrix board included in the cross-connect switch shown in Fig. 5.
- Fig. 7: shows an example of cross point connection in the matrix board shown in Fig. 6.
- Fig. 8: shows an exemplary cross point connection pin used to establish a cross point connection in the matrix board shown in Fig. 6.
- Fig. 9: shows an exemplary robotic cross connector included in the cross-connect switch shown in Fig. 5.
- Fig. 10: is an exemplary block diagram of an apparatus that verifies proper connection of a cross point connection pin shown in Fig. 8.
- Fig. 11: shows an example of matrix boards in relation to the robotic cross connector.
- Figs. 12-17: illustrate some standard 3 dimensional connection paths, which are completed by the cross-connect switch in response to commands.

### DETAILED DESCRIPTION OF THE INVENTION

Digital Subscriber Line (DSL) is one of the signal protocols being used to carry broadband digital data over existing two-wire telephone lines. There are several versions of DSL in common use. Asymmetric DSL (ADSL) provides greater bandwidth for downstream data than for upstream data. In addition, ADSL reserves a portion of the available channel bandwidth for support of traditional analog telephone service (Plain Old Telephone Service (POTS)). ADSL is aimed primarily at the residential market. Another version of DSL is Symmetric DSL (SDSL). SDSL provides equal bandwidth in both the upstream and downstream directions and does not provide support for POTS. SDSL is better suited to business applications, such as network server communications, etc.

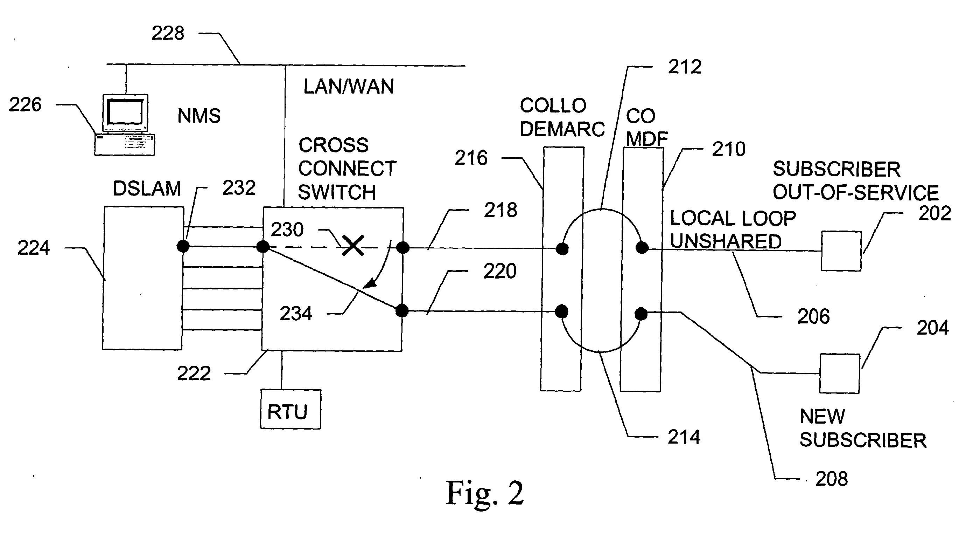

The arrangement by which the present invention switches, connects, and disconnects circuits is shown in Fig. 2. As shown in Fig. 2, there are a plurality of subscribers, such as subscribers 202 and 204, connected via two-wire telephone lines, such as lines 206 and 208, respectively. Blocks 202 and 204 include data processing equipment operated by the respective subscribers, as well as digital subscriber line interface equipment connected to the data processing equipment. Lines 206 and 208 are typically unshared, that is, they are not shared with other subscribers or with other services, such as analog voice telephony. Note however that if these line are shared with voice services, then splitters would be used both at the subscriber side and at the CO. Lines 206 and 208 are terminated at the MDF 210 in the central office and then connected via patch cables 212 and 214, respectively, to a termination block 216 in the collocation arrangement (COLLO).

Lines 218 and 220, respectively, connect from termination block to ports of cross-connect switch 222. Ports of cross connect switch 222 also connect to DSLAM 224. DSLAM 224 is a system that links customer DSL connections to an IP network. Typically, the IP network is the Internet, but may be any public or private data transport network.

Network management system (NMS) 226 is connected to cross-connect switch 222 via a network 228, which can be any standard or proprietary network, such as a local area network (LAN) or a wide area network (WAN). NMS 226 can control the configuration and operation of cross-connect switch 222 over network 228. Likewise, NMS 226 can determine the status and configuration of cross-connect switch 222 over network 228. Note that serial connection based systems such as dial-up modems may also be used to establish control links to the cross-connect 222.

An example of a suitable cross-connect switch 22, is the CONTROLPOINT ™ switch available from NHC. As used herein, the terms cross-connect and cross-connect switch are intended to mean any switch capable of reliably interconnecting telecommunications signals, including voice and data signals, from inputs to outputs under the influence of internal or external control signals. The terms are intended to encompass any such switch and control systems, including loop management systems. To illustrate the operation of an embodiment of a cross-connect switch 222 and the manner in which it is controlled, the CONTROLPOINT switch available from NHC is hereafter briefly described.

The CONTROLPOINT solution is NHC's integrated non-blocking copper cross-connect system that helps CLECs and ILECs qualify and provision DSL and other services remotely without the need to enter the CLEC's COLLO or ILEC's CO. The CONTROLPOINT solution works with third party equipment such as Harris, Hekimian and Tollgrade Remote Test Units, enabling the cross-connect to be used as a test access platform for rapid loop qualification. The CONTROLPOINT solution may be deployed for DSL test access for local loop qualification, provisioning, migration and fallback switching. The CONTROLPOINT solution is intended to work with every major DSLAM vendor.

The CONTROLPOINT cross-connect hardware has a matrix size and loopback capabilities that allow multiple services to be provisioned and migrated remotely on-the-fly and on-demand, thereby minimizing truck-rolls needed to qualify and provision high speed data services. The CONTROLPOINT solution allows the service provider to migrate users to higher speed data services quickly. The CLEC has the ability to use any available port on the DSLAM for fallback switching thus providing added value to both the CLEC and the subscriber.

The CONTROLPOINT solution is managed via two-key elements: CONTROLPOINT CMS 226 and CONTROLPOINT CMS Remote (Controller) (not shown). CONTROLPOINT CMS 226 is the control and management software for NHC's CONTROLPOINT Solution. Element 226 is later referred to generically as network management systems (NMS) and may also be referred to as terminals. CONTROLPOINT CMS 226 communicate with NHC's CONTROLPOINT Copper Cross-Connect 222 via the CONTROLPOINT CMS Remote Controller to allow voice and high-speed data service providers to take full control of their copper cross-connect infrastructure.

CONTROLPOINT CMS controls and tracks the physical connections within the CONTROLPOINT matrix, along with vital subscriber and equipment information. CONTROLPOINT CMS features an intuitive Graphical User Interface (GUI) for greater ease of use. Port connections involve a simple drag & drop operation. CONTROLPOINT CMS's integrated database tracks CONTROLPOINT subscriber/service connections and organizes the network into multi-level geographical views by country, city and site location.

CONTROLPOINT CMS Remote is the SNMP control interface for NHC's CONTROLPOINT copper cross-connect switch, which allow the CONTROLPOINT cross-connect 222 to be managed via NHC's CONTROLPOINT Control and Management Software (CMS) or managed via third party Network Management System (NMS). The CONTROLPOINT CMS Remote is connected to an Ethernet LAN and is accessible via standard SNMP commands. The CONTROLPOINT CMS Remote connects to CONTROLPOINT cross-connect via serial link. The device receives standard SNMP commands from the NMS or CONTROLPOINT CMS and communicates them to the CONTROLPOINT cross-connect. Support for API (application interfaces) within the CONTROLPOINT CMS Remote and CONTROLPOINT CMS allows for customization to support NHC's proposed line-sharing solution.

While the CONTROLPOINT switching system may be used to implement the cross-connect switch, it will be understood that any remotely controllable cross-connect switching system may be implemented according to embodiments of the present invention. The cross-connect switch 222 and its controllers are hereafter referred to generically. Also, the terms cross-connect switch and cross-connect are used interchangeably.

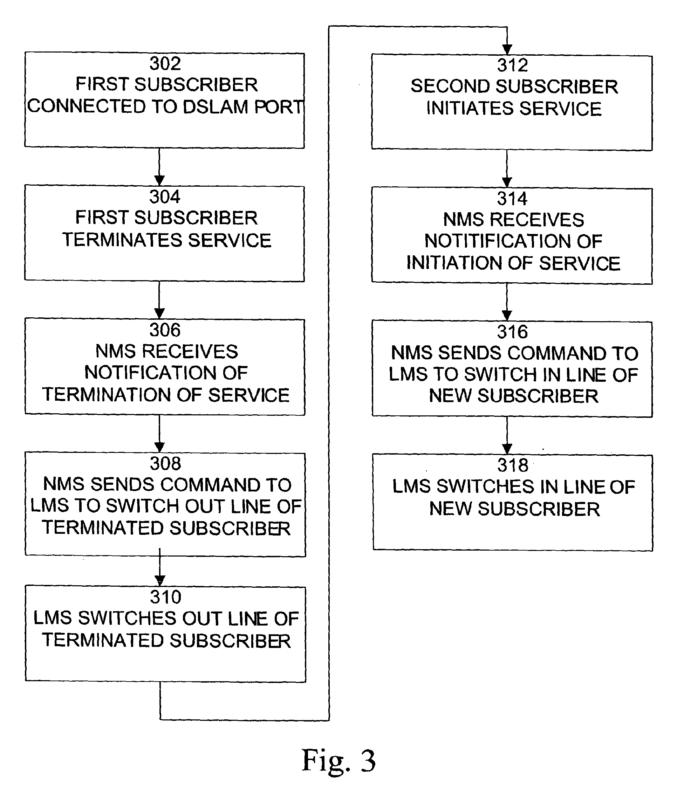

A process of operation of the present invention, implemented in the system shown in Fig. 2, is shown in Fig. 3. It is best viewed in conjunction with Fig. 2. The process begins with step 302, in which, initially, a first subscriber 202 is connected to cross-connect switch 222 via line 206, central office MDF 210, patch line 212, COLLO demarcation 216 and line 218. Cross-connect switch 222 connects subscriber 202 to port 232 of DSLAM 224 by way of connection 230. In step 304, subscriber 202 terminates xDSL service with the operator of DSLAM 224, making the connection of subscriber 202 to port 232 of DSLAM 224 obsolete. In step 306, network management system 226 receives notification of termination of service of subscriber 202. In step 308, in response to receiving notification of termination of service of subscriber 202, network management system 226 transmits a command to cross-connect switch 222 to switch out the line of terminated subscriber 202. In step 310, in response to the command received from network management system 226, cross-connect switch 222 switches out the line of terminated subscriber 202. In order to implement the switch out, cross connect switch 222 disconnects or deletes connection 230, which had been connecting the line from subscriber 202 to port 232 of DSLAM 224. The switch out frees up port 232 of DSLAM for future connection.

In step 312, a second subscriber 204 establishes new xDSL service with the operator of DSLAM 224. In order to establish service, subscriber 204 is connected via line 208, central office MDF 210, patch line 214, and COLLO demarcation 216, through line 220, to cross-connect switch 222. In step 314, network management system 226 receives notification of establishment of service of subscriber 204. In step 316, in response to receiving notification of establishment of service of subscriber 204, network management system 226 transmits a command to cross-connect switch 222 to switch in the line of new subscriber 204. In step 318, in response to the command received from network management system 226, cross-connect switch 222 switches in the line of new subscriber 204. In order to implement the switch in, cross connect switch 222 establishes connection 234, which connects the line from subscriber 204 to a port of DSLAM 224, such as port 232, which was freed up by the disconnection of subscriber 202.

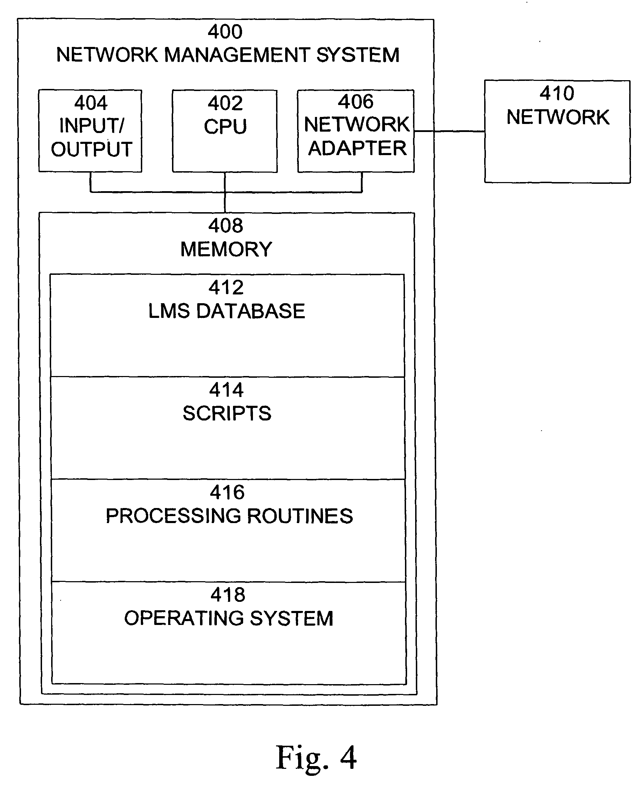

An exemplary block diagram of a network management system 400, according to the present invention, is shown in Fig. 4. Network management system 400 is typically a programmed general-purpose computer system, such as a personal computer, workstation, server system, and minicomputer or mainframe computer. Network management system 400 includes processor (CPU) 402, input/output circuitry 404, network adapter 406, and memory 408. CPU 402 executes program instructions in order to carry out the functions of the present invention. Typically, CPU 402 is a microprocessor, such as an INTEL PENTIUM® processor, but may also be a minicomputer or mainframe computer processor. Input/output circuitry 404 provides the capability to input data to, or output data from, computer system 400. For example, input/output circuitry may include input devices, such as keyboards, mice, touchpads, trackballs, scanners, etc., output devices, such as video adapters, monitors, printers, etc., and input/output devices, such as, modems, etc. Network adapter 406 interfaces network management system 400 with network 410. Network 410 may be any standard local area network (LAN) or wide area network (WAN), such as Ethernet, Token Ring, the Internet, or a private or proprietary LAN/WAN, but typically, IP network 220 is the Internet. A serial dial-up connection may also be used here.

Memory 408 stores program instructions that are executed by, and data that are used and processed by, CPU 402 to perform the functions of the present invention. Memory 408 may include electronic memory devices, such as random-access memory (RAM), read-only memory (ROM), programmable read-only memory (PROM), electrically erasable programmable read-only memory (EEPROM), flash memory, etc., and electro-mechanical memory, such as magnetic disk drives, tape drives, optical disk drives, etc., which may use an integrated drive electronics (IDE) interface, or a variation or enhancement thereof, such as enhanced IDE (EIDE) or ultra direct memory access (UDMA), or a small computer system interface (SCSI) based interface, or a variation or enhancement thereof, such as fast-SCSI, wide-SCSI, fast and wide-SCSI, etc, or a fiber channel-arbitrated loop (FC-AL) interface.

Memory 408 includes a plurality of blocks of data, such as Loop Management System (LMS) database 412 and scripts block 414, and a plurality of blocks of program instructions, such as processing routines 416 and operating system 418. LMS database 412 stores information relating to cross-connect switches that are managed and controlled by NMS 400, including information relating to connections maintained by the cross-connect switch. Scripts block 414 includes scripts that are transmitted by NMS 400 to cross-connect switches to control the connection of circuits. Processing routines 416 are software routines that implement the processing performed by the present invention, such as receiving SNMP messages, accessing LMS database 412, transmitting scripts from script block 414, etc. Operating system 418 provides overall system functionality.

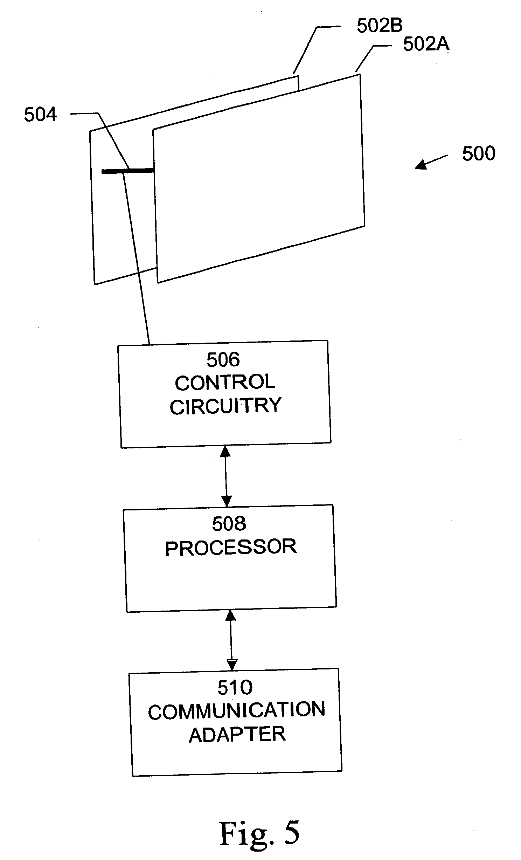

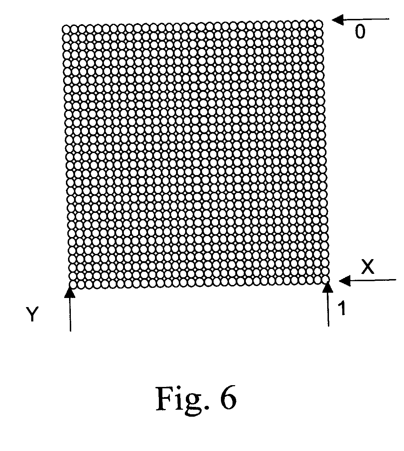

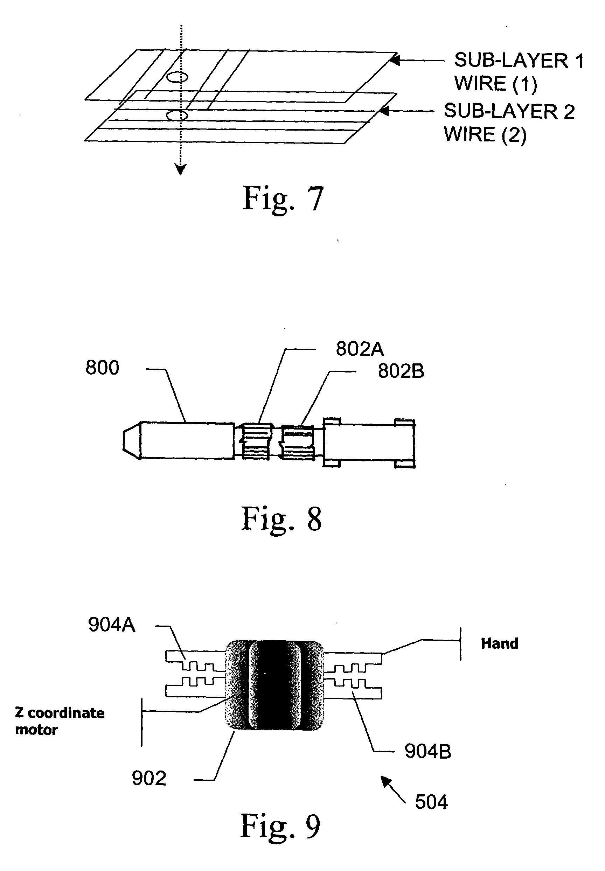

An exemplary block diagram of a Remote Cross-Connect Switch 500 is shown in Fig. 5. Switch 500 includes matrix boards 502A and 502B, robotic cross-connector 504, control circuitry 506, processor 508 and communication adapter 510. Matrix boards 502A and 502B, an example of which is shown in more detail in Fig. 6, are multi-layer matrices of circuits having holes at the intersections of circuits on different layer. The holes, known as cross points, allow the connection of pairs of circuits on different layers by the use of conductive pins. To make a cross connections, a pin is inserted into one of the holes in a matrix board, as shown in Fig. 7. Each pin, such as pin 800, shown in Fig. 8, has two metal contacts 802A and 802B on the shaft, which create the connection between the circuits on different layers of the matrix board.

Robotic cross connector 504, an example of which is shown in Fig. 9, provides the capability to move a pin to an appropriate cross point and to insert the pin to form a connection at the cross point or remove the pin to break a cross connection. The mechanism of robotic cross connector 504 is capable of movement in three dimensions, using a separate motor for movement in each dimension. For example, Z-coordinate motor 902, shown in Fig. 9, provides movement of the mechanism along the Z axis. A pin is carried, inserted and removed by a robotic "hand", such as hand 904A or 904B, which is part of robotic cross connector 504.

Control circuitry 506 generates the signals necessary to control operation of robotic cross-connector 504, in response to commands from processor 508. Processor 508 generates the commands that are output to control circuitry 506 in response to commands received from the network management system via communication adapter 510.

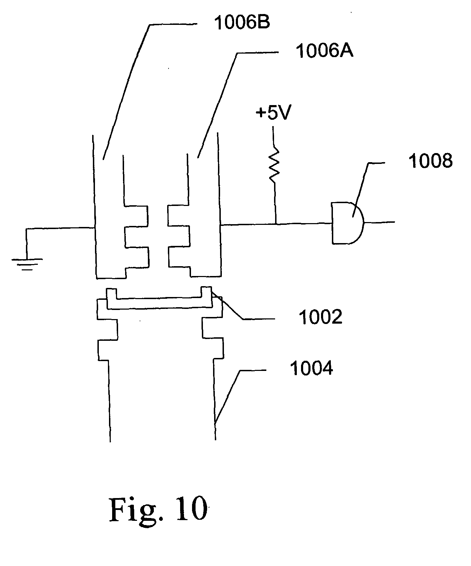

Once the pin has been inserted into the cross-point, robotic cross connector 504 then verifies that the connection has been successfully made, as shown in Fig. 10. In addition to the metal contacts on the shaft of each pin that form the connections, there is also a metal strip 1002 attached to each pin, such as pin 1004. The robot verifies the connection by sending a small current from one hand 1006A to the other hand 1006B. The metallic parts of the robot hand are electrically insulated. Hand 1006B is connected to the ground and hand 1006A is connected to current detector 1008. When the hands touches the metallic strip on the head of connect pin, current flows through the pin and the output of detector 1008 will change states if the insertion is good. If the insertion is not good then the output of detector 1008 will not change.

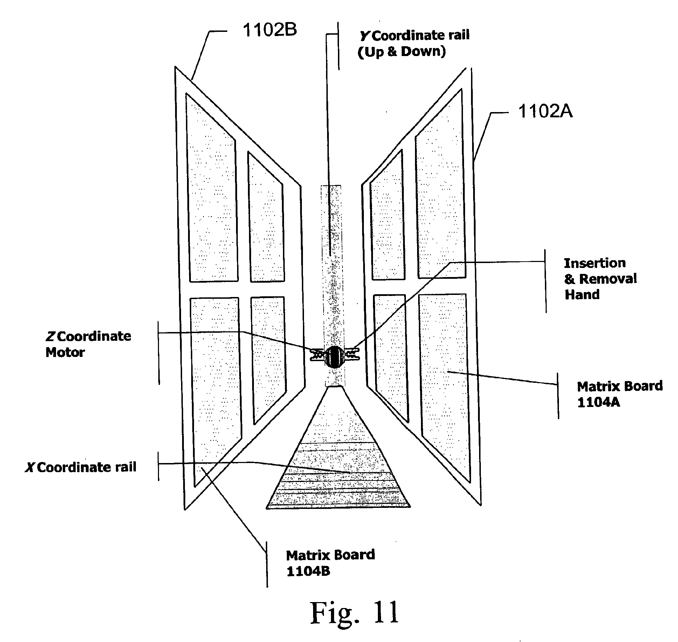

An example of matrix boards in relation to the robotic cross-connector is shown in Fig. 11. As shown, typically two mother boards 1102A and 1102B, upon which matrix boards 1104A - 1104N are mounted, one robotic cross-connector 1106, and the additional circuitry are grouped to form a cross connect system.

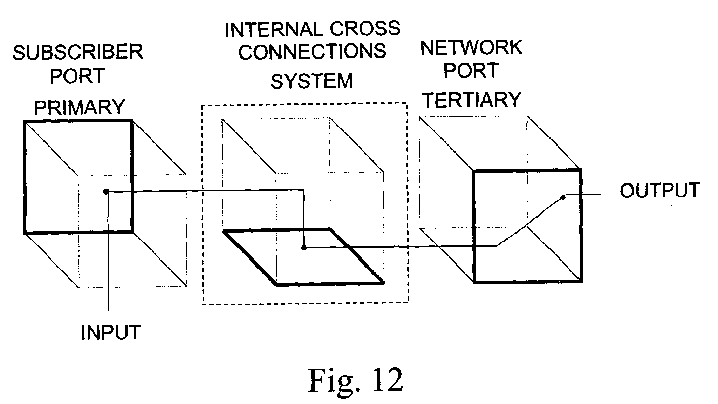

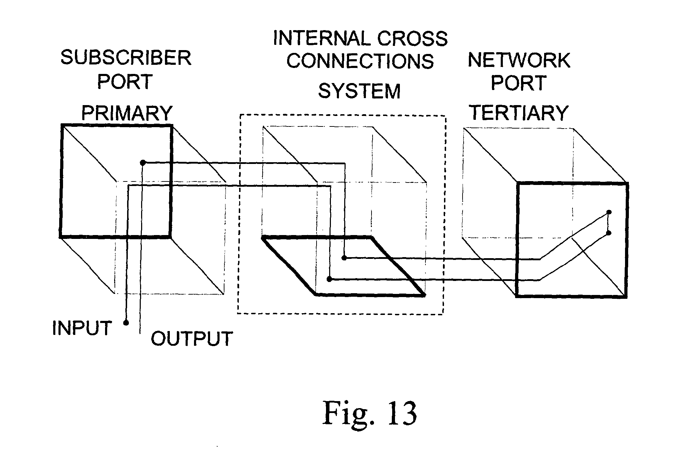

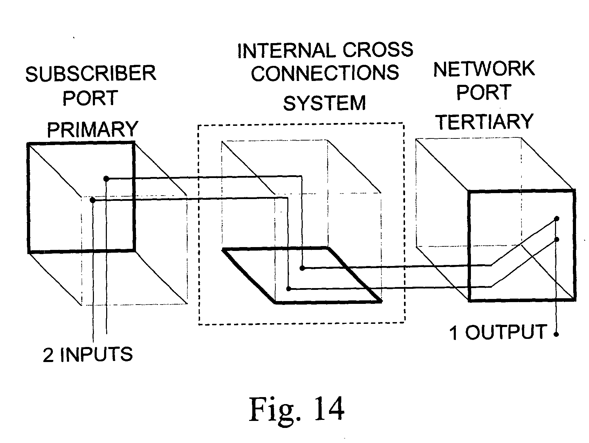

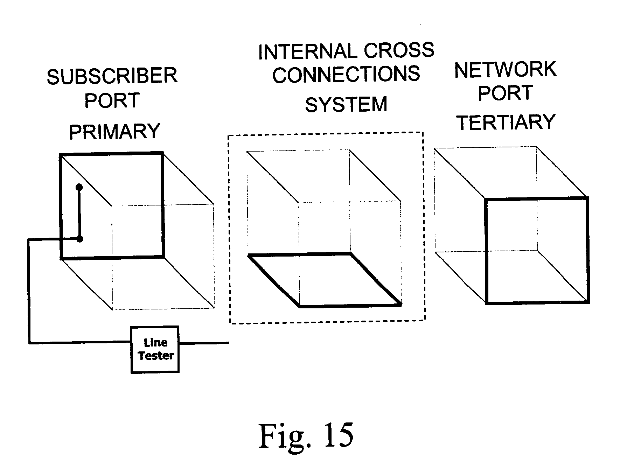

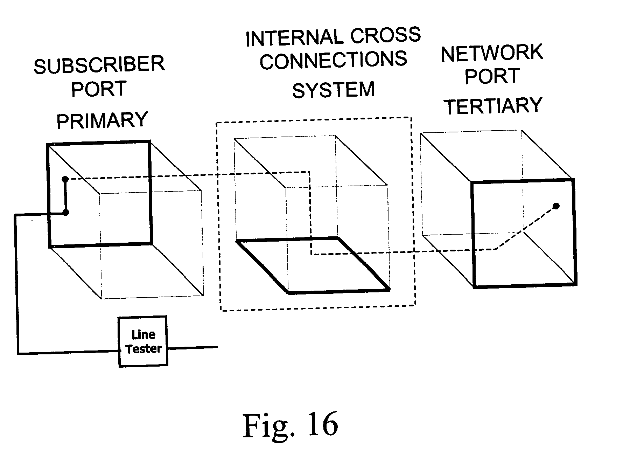

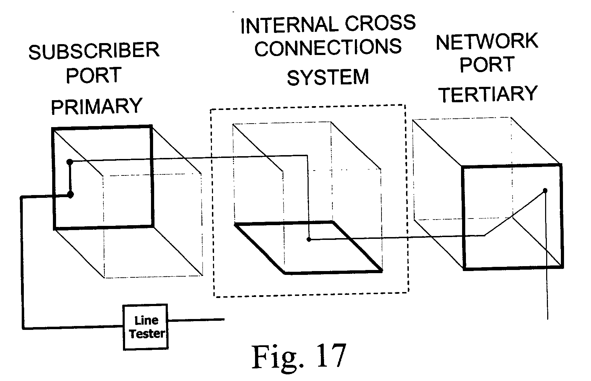

Figs. 12 - 17 illustrate some standard 3 dimensional connection paths, which are completed by the Remote Cross-Connect Switch in response to commands.

Although specific embodiments of the present invention have been described, it will be understood by those of skill in the art that there are other embodiments that are equivalent to the described embodiments. Accordingly, it is to be understood that the invention is not to be limited by the specific illustrated embodiments, but only by the scope of the appended claims.

## Claims

1. A method of providing digital subscriber line service comprising the steps of:
providing digital subscriber line service for a first subscriber via a cross-connect switch connected to a digital subscriber line access multiplexer connected to a digital telecommunications network, the cross connect switch supplying a connection between data processing equipment of the first subscriber and the digital subscriber line access multiplexer;
receiving, at a network management system connected to the cross connect switch, an indication that the first subscriber has terminated service;
in response to receiving the indication at the network management system, transmitting a command to the cross connect switch to switch out the connection of the data processing equipment of first subscriber to the digital access multiplexer; and
in response to receiving the command at the cross-connect switch, switching out the connection of the data processing equipment of first subscriber to the digital access multiplexer.

2. The method of claim 1, wherein the connection between data processing equipment of the first subscriber and the digital subscriber line access multiplexer comprises a central office MDF connected to the data processing equipment of the first subscriber, a collocation arrangement demarcation connected to the cross-connect switch and a patch line connecting the central office MDF to the collocation arrangement demarcation.

3. The method of claim 2, wherein the connection between the data processing equipment of the first subscriber and the central office MDF is unshared.

4. The method of claim 3, wherein the cross-connect switch is connected to a port of the digital subscriber line access multiplexer.

5. The method of claim 4, wherein the step of switching out the connection of the data processing equipment of first subscriber to the digital access multiplexer frees up the port of the digital subscriber line access multiplexer.

6. The method of claim 1, wherein the method further comprises the steps of:
receiving, at a network management system connected to the cross connect switch, an indication that a second subscriber has initiated service;
in response to receiving the indication at the network management system, transmitting a command to the cross connect switch to connect data processing equipment of second subscriber to the digital access multiplexer; and
in response to receiving the command at the cross-connect switch, connecting the data processing equipment of the second subscriber to the digital access multiplexer.

7. The method of claim 6, wherein the cross-connect switch is connected to a port of the digital subscriber line access multiplexer and the step of switching out the connection of the data processing equipment of the first subscriber to the digital access multiplexer frees up the port of the digital subscriber line access multiplexer

8. The method of claim 7, wherein the step of connecting the data processing equipment of the second subscriber to the digital access multiplexer comprises the step of:
connecting the data processing equipment of the second subscriber to the port of the digital subscriber line access multiplexer that was freed up by the step of switching out the connection of the data processing equipment of first subscriber to the digital access multiplexer.

9. The method of claim 8, wherein the connection between data processing equipment of the first subscriber and the digital subscriber line access multiplexer comprises a central office MDF connected to the data processing equipment of the second subscriber, a collocation arrangement demarcation connected to the cross-connect switch and a patch line connecting the central office MDF to the collocation arrangement demarcation.

10. The method of claim 9, wherein the connection between the data processing equipment of the first subscriber and the central office MDF is unshared.

11. The method of claim 10, wherein the connection between data processing equipment of the second subscriber and the digital subscriber line access multiplexer comprises a central office MDF connected to the data processing equipment of the second subscriber, a collocation arrangement demarcation connected to the cross-connect switch and a patch line connecting the central office MDF to the collocation arrangement demarcation.

12. The method of claim 11, wherein the connection between the data processing equipment of the second subscriber and the central office MDF is unshared.

13. A system for providing digital subscriber line service comprising:
means for providing digital subscriber line service for a first subscriber via a cross-connect switch connected to a digital subscriber line access multiplexer connected to a digital telecommunications network, the cross connect switch supplying a connection between data processing equipment of the first subscriber and the digital subscriber line access multiplexer;
means for receiving, at a network management system connected to the cross connect switch, an indication that the first subscriber has terminated service;
means for, in response to receiving the indication at the network management system, transmitting a command to the cross connect switch to switch out the connection of the data processing equipment of first subscriber to the digital access multiplexer; and
means for, in response to receiving the command at the cross-connect switch, switching out the connection of the data processing equipment of first subscriber to the digital access multiplexer.

14. The system of claim 13, wherein the connection between data processing equipment of the first subscriber and the digital subscriber line access multiplexer comprises a central office MDF connected to the data processing equipment of the first subscriber, a collocation arrangement demarcation connected to the cross-connect switch and a patch line connecting the central office MDF to the collocation arrangement demarcation.

15. The system of claim 14, wherein the connection between the data processing equipment of the first subscriber and the central office MDF is unshared.

16. The system of claim 15, wherein the cross-connect switch is connected to a port of the digital subscriber line access multiplexer.

17. The system of claim 16, wherein the means for switching out the connection of the data processing equipment of first subscriber to the digital access multiplexer frees up the port of the digital subscriber line access multiplexer.

18. The system of claim 13, wherein the system further comprises:
means for receiving, at a network management system connected to the cross connect switch, an indication that a second subscriber has initiated service;
means for, in response to receiving the indication at the network management system, transmitting a command to the cross connect switch to connect data processing equipment of the second subscriber to the digital access multiplexer; and
means for, in response to receiving the command at the cross-connect switch, connecting the data processing equipment of the second subscriber to the digital access multiplexer.

19. The system of claim 18, wherein the cross-connect switch is connected to a port of the digital subscriber line access multiplexer and the step of switching out the connection of the data processing equipment of first subscriber to the digital access multiplexer frees up the port of the digital subscriber line access multiplexer

20. The system of claim 19, wherein the step of connecting the data processing equipment of second subscriber to the digital access multiplexer comprises the step of:
connecting the data processing equipment of the second subscriber to the port of the digital subscriber line access multiplexer that was freed up by the step of switching out the connection of the data processing equipment of first subscriber to the digital access multiplexer.

21. The system of claim 20, wherein the connection between data processing equipment of the first subscriber and the digital subscriber line access multiplexer comprises a central office MDF connected to the data processing equipment of the second subscriber, a collocation arrangement demarcation connected to the cross-connect switch and a patch line connecting the central office MDF to the collocation arrangement demarcation.

22. The system of claim 21, wherein the connection between the data processing equipment of the first subscriber and the central office MDF is unshared.

23. The system of claim 22, wherein the connection between data processing equipment of the second subscriber and the digital subscriber line access multiplexer comprises a central office MDF connected to the data processing equipment of the second subscriber, a collocation arrangement demarcation connected to the cross-connect switch and a patch line connecting the central office MDF to the collocation arrangement demarcation.

24. The system of claim 23, wherein the connection between the data processing equipment of the second subscriber and the central office MDF is unshared.

25. A system for providing digital subscriber line service comprising:
a cross-connect switch connected to a digital subscriber line access multiplexer connected to a digital telecommunications network, the cross connect switch operable to supply a connection between data processing equipment of a first subscriber and the digital subscriber line access multiplexer;
a network management system connected to the cross connect switch operable to receive an indication that the first subscriber has terminated service and operable to, in response to receiving the indication, transmit a command to the cross connect switch to switch out the connection of the data processing equipment of first subscriber to the digital access multiplexer; and
wherein the cross-connect switch is further operable to, in response to receiving the command from the network management system, switch out the connection of the data processing equipment of first subscriber to the digital access multiplexer.

26. The system of claim 25, wherein the connection between data processing equipment of the first subscriber and the digital subscriber line access multiplexer comprises a central office MDF connected to the data processing equipment of the first subscriber, a collocation arrangement demarcation connected to the cross-connect switch and a patch line connecting the central office MDF to the collocation arrangement demarcation.

27. The system of claim 26, wherein the connection between the data processing equipment of the first subscriber and the central office MDF is unshared.

28. The system of claim 27, wherein the cross-connect switch is connected to a port of the digital subscriber line access multiplexer.

29. The system of claim 28, wherein the means for switching out the connection of the data processing equipment of first subscriber to the digital access multiplexer frees up the port of the digital subscriber line access multiplexer.

30. The system of claim 25, wherein the network management system is further operable to receive an indication that a second subscriber has initiated service and is further operable to, in response, transmit a command to the cross connect switch to connect data processing equipment of second subscriber to the digital access multiplexer; and the cross-connect switch is further operable to, in response to receiving the command, connect the data processing equipment of the second subscriber to the digital access multiplexer.

31. The system of claim 30, wherein the cross-connect switch is connected to a port of the digital subscriber line access multiplexer and the step of switching out the connection of the data processing equipment of first subscriber to the digital access multiplexer frees up the port of the digital subscriber line access multiplexer

32. The system of claim 31, wherein the cross-connect switch is further operable to connect the data processing equipment of the second subscriber to the port of the digital subscriber line access multiplexer that was freed up by switching out the connection of the data processing equipment of first subscriber to the digital access multiplexer.

33. The system of claim 32, wherein the connection between data processing equipment of the first subscriber and the digital subscriber line access multiplexer comprises a central office MDF connected to the data processing equipment of the second subscriber, a collocation arrangement demarcation connected to the cross-connect switch and a patch line connecting the central office MDF to the collocation arrangement demarcation.

34. The system of claim 33, wherein the connection between the data processing equipment of the first subscriber and the central office MDF is unshared.

35. The system of claim 34, wherein the connection between data processing equipment of the second subscriber and the digital subscriber line access multiplexer comprises a central office MDF connected to the data processing equipment of the second subscriber, a collocation arrangement demarcation connected to the cross-connect switch and a patch line connecting the central office MDF to the collocation arrangement demarcation.

36. The system of claim 35, wherein the connection between the data processing equipment of the second subscriber and the central office MDF is unshared.
